(19) Europäisches Patentamt / European Patent Office / Office européen des brevets

(11) **EP 4 489 293 B1**

(12) **EUROPEAN PATENT SPECIFICATION**

(45) Date of publication and mention
of the grant of the patent:
**08.07.2026 Bulletin 2026/28**

(21) Application number: **23183906.9**

(22) Date of filing: **06.07.2023**

(51) International Patent Classification (IPC):
**H02P 21/18** (2016.01)     **H02P 1/02** (2006.01)
**H02P 1/46** (2006.01)

(52) Cooperative Patent Classification (CPC):
**H02P 1/02; H02P 1/025; H02P 1/46; H02P 21/18**

(54) **A METHOD FOR DETERMINING POLARITY OF A ROTOR IN AN INTERIOR PERMANENT MAGNET SYNCHRONOUS MOTOR**

VERFAHREN ZUR BESTIMMUNG DER POLARITÄT EINES ROTORS IN EINEM INNEREN PERMANENTMAGNETSYNCHRONMOTOR

PROCÉDÉ DE DÉTERMINATION DE POLARITÉ D'UN ROTOR DANS UN MOTEUR SYNCHRONE À AIMANT PERMANENT INTÉRIEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**08.01.2025 Bulletin 2025/02**

(73) Proprietor: **Polestar Performance AB**
**405 31 Västra Frölunda (SE)**

(72) Inventors:
• **LAURELL, Jakob**
**422 51 Hisings Backa (SE)**

• **HU, Yifei**
**417 62 Göteborg (SE)**
• **HOFWIMMER, Rasmus**
**41316 Göteborg (SE)**

(74) Representative: **Zacco Sweden AB**
**P.O. Box 5581**
**Löjtnantsgatan 21**
**114 85 Stockholm (SE)**

(56) References cited:
**US-A1- 2018 138 841     US-B1- 10 784 805**

**Description**

TECHNICAL FIELD

The disclosed technology relates to the field of interior permanent magnet synchronous motors, and in particular to a method, device and computer program product for determining polarity of a rotor of a permanent magnet synchronous motor for use in a resolver offset calibration operation.

BACKGROUND

Interior permanent magnet synchronous motors (IPMSMs) are today widely used in various applications, such as electric vehicles, industrial machinery, and robotics. Precise control of IPMSMs is essential for optimal performance, and resolver-based position sensing is commonly employed to achieve accurate rotor position feedback.

A resolver is a type of electromechanical transducer that provides angular position information based on the interaction between magnetic fields and a rotating rotor of the IPMSM. Resolvers offer several advantages over other position sensing technologies, such as high accuracy, robustness against physical environment and high temperatures, as well as improved reliability.

To ensure accurate rotor position determination, a resolver offset calibration has to be performed. Resolver offset refers to the angular misalignment between the actual physical position of the rotor and the position indicated by the resolver. Factors such as manufacturing tolerances, installation misalignment, and temperature variations can contribute to the resolver offset. Therefore, a calibration procedure is necessary to determine and compensate for these errors to achieve precise motor control.

One present approach of performing resolver offset calibration is the so-called high-frequency injection (HFI) method. This approach is desirable since it can be performed without the need for rotating the motor. In the application of electric vehicles for instance, this allows the calibration process to be performed also during those situations where the rotor cannot be rotated, such as during end-of-line testing, of aftermarket services, which saves cost and simplifies the procedure. As the name suggests, the HFI method builds upon injection of a high-frequency signal into the motor, and determining an angular position of the rotor based on an output from the resolver. The resolver position obtained from the HFI method does not however say anything about the polarity of the rotor, i.e. which end is the north and south pole respectively. For this reason, a polarity check has to be performed. Determining a correct polarity of the rotor is crucial, since an incorrect polarity leads to incorrect position feedback, which can result in reduced performance. If the polarity is incorrectly assumed to be opposite from what is actually is, it may even lead to the motor rotating in the opposite direction from what is intended, posing significant safety risks. In general, an incorrect polarity will significantly disrupt the motor control system's accuracy and performance.

Current ways of determining the polarity is sensitive to errors, e.g. harmonics, spikes or noise in the measured phase current inputs, caused e.g. by motor designs, switching and non-linearities of the inverter, and that of measured outputs of the resolver. The present invention thus seeks to improve aspects of the process of determining the polarity of the rotor, compared to the solutions known today.

US 10 784 805 B1 discloses a system and method for robust control of a sensorless interior permanent magnet synchronous motor. The system and method includes rotor characteristic detection to detect or estimate rotor position, rotor speed, and rotor magnetic polarity based on rotor magnetic anisotropy or saliency. Detecting rotor magnetic polarity allows determination of orientation of the rotor and, for a rotor in motion, direction of travel. A high frequency injection enables rotor position detection and an alternating carrier method enables detection of rotor magnetic polarity. The system and method can also include closed loop startup control from a standstill condition following detection of rotor characteristics.

US 2018/138841 A1 discloses a system for controlling an electric motor. The system includes a position sensor configured to measure a physical position of a rotor of the electric motor; and a position estimator. The position estimator is configured to: inject a voltage signal having a predetermined frequency into the electric motor, generate an estimated position of a rotor flux based on a feedback current signal in response to the injected voltage signal, and compensate for an offset between the physical position measured by the position sensor and an actual position of the rotor flux based on the estimated position.

SUMMARY

The invention is defined the independent claims 1, 10,11 and 12and the preferred embodiments in the dependent claims 2-9.

The herein disclosed technology seeks to mitigate, alleviate or eliminate one or more of the above-identified deficiencies and disadvantages in the prior art to address various problems relating to the determination of polarity as part of a resolver offset calibration operation.

The inventors have realized a new and improved way of determining the polarity of the rotor. A common way to check the polarity is to simply compare the absolute maximum and minimum value of a d axis current. However, due to switching, non-linearities of an inverter and different machine designs, some harmonics and spikes can be expected on the d axis current. Those unwanted effects can lead to an unreliable maximum and minimum values of d axis current which can yield wrong polarity. The present inventive concept provides a polarity check that is more reliable and robust against such unwanted effects. Various aspects and embodiments of the disclosed technology are defined below and in the accompanying independent and dependent claims.

According to a first aspect, there is provided a method for determining polarity of a rotor in an interior permanent magnet synchronous motor for use in a resolver offset calibration operation, as defined in claim 1

As stated above, a possible associated advantage of the present inventive concept is that it may provide a robust implementation enabling to derive a correct polarity consistently in a reliable and robust way. This may be at least partly due to the integration over the plurality of time periods, which reduces the contribution of the individual max and min values, thus reducing the risk of inaccurate readings affecting the polarity determination. It may be further advantageous in that the defined condition being checked for the max and min values of the plurality of time periods allows for including only those max and min values that are found to fulfill the condition, and thus can be regarded as reliable values. Any max and min values not fulfilling the condition may be excluded from the integration. More specifically, due to switching of a power module in an inverter and its non-linearity effects, possibly bad electrical machine designs, and EMC interferences, some unexpected noise, harmonics, and spikes may occur in the estimated d axis current and thus affect the max and min values. The defined condition may be used to discard such unqualified max and min values, which additionally improves the robustness.

When used as part of a resolver offset calibration operations based on injection of a signal (such as the HFI method), the presently disclosed technology may further provide for the same advantages that comes with not having to rotate the rotor during the process, e.g. reducing cost and complexity in end-of-line testing and aftermarket services.

A possible associated advantage is that when used in a resolver offset calibration operation such as the HFI method, which also uses a sine wave voltage signal, implementation of the method for determining polarity can be simplified. More specifically, there is no need for additional signal injection other than the already carried out as part of the resolver offset calibration operation.

The polarity of the rotor may be determined further based on d axis inductance characteristics of the motor.

The polarity of the rotor may be determined as either 0 or 180 degrees offset from a rotor position determined by the resolver offset calibration operation.

The polarity may be determined as 0 degrees offset from a rotor position determined by the resolver offset calibration operation, if the sum is less than 0, and as 180 degrees offset, if the sum is greater than 0.

The defined condition may define whether the maximum and minimum values are valid values.

As the estimated d axis current can be expected to follow a repeating pattern, looking at the difference between the max and min value may provide a simple way of detecting any anomalies in either the max or min value, or both.

The threshold value may be based on d axis inductance characteristics of the motor.

A possible associated advantage is that the defined condition then can be made to reflect the specific motor in questions, thus improving the polarity determination.

The maximum and minimum values can be evaluated individually against a respective pre-defined value. This may be advantageous in that the check of the defined condition becomes more robust. This may for instance be advantageous in a scenario where both the maximum and minimum value deviates by a similar amount from a respective expected value, and thus the error is not reflected in a difference between the two values.

The period of the injected alternating voltage signal may be defined as a period between two consecutive zero-crossing rising edges of the estimated d axis current.

A possible associated advantage is that this can provide for a dynamic approach of setting the duration of each time period. It may further be advantageous in that the transition between two subsequent time periods is set around a point in which the estimated d axis current is zero, thus likely far away from the possible maximum of minimum value. This may improve the likelihood of the actual maximum and minimum values being captured within the time period.

The time period may be further defined such that it fulfils a time period condition. The time period condition may be that the period is within a set interval from a period of the injected alternating voltage signal.

A possible associated advantage is that the time period may be selected in a way that is more robust against harmonics, noise or other anomalies in the estimated d axis current. This may be particularly advantageous in combination with using the zero-crossing rising edge as indication of the time periods, as more than one zero-crossing rising edge may occur in one time period e.g. due to noise or spikes in the signal. The check against the set interval may thus be used to ensure the validity of the time period duration.

The set interval may be at least 75% of the period of the injected alternating voltage signal. This may be advantageous in that it can be used to rule out any unqualified time periods, while still allowing for some variation in the duration of the time periods.

The method may further comprise transmitting the determined polarity to a control system of the motor.

According to a second aspect, there is provided a computer program product comprising instructions which, when the program is executed by a computing device, causes the computing device to carry out the method according to the first aspect. The above-mentioned features of the previous aspects, when applicable, apply to this second aspect as well. In order to avoid undue repetition, reference is made to the above.

According to a third aspect, there is provided a (non-transitory) computer-readable storage medium. The non-transitory computer-readable storage medium stores one or more programs configured to be executed by one or more processors of a processing system, the one or more programs comprising instructions for performing the method according to the first aspect. The above-mentioned features of the previous aspects, when applicable, apply to this third aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a fourth aspect, there is provided a device for determining polarity of a rotor in an interior permanent magnet synchronous motor for use in a resolver offset calibration operation, as defined in claim 11. The above-mentioned features of the previous aspects, when applicable, apply to this fourth aspect as well. In order to avoid undue repetition, reference is made to the above.

According to a fifth aspect, there is provided a method for calibrating a resolver offset associated with an interior permanent magnet synchronous motor, as defined in claim 12. The above-mentioned features of the previous aspects, when applicable, apply to this fifth aspect as well. In order to avoid undue repetition, reference is made to the above.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

Further embodiments are defined in the dependent claims. These and other features and advantages of the disclosed technology will in the following be further clarified with reference to the embodiments and variants described hereinafter.

BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:

Figure 1 is a schematic flowchart representation of a method for determining polarity of a rotor in an interior permanent magnet synchronous motor according to some embodiments.

Figure 2 is a schematic illustration of a device configured to perform the method for determining polarity of a rotor in an interior permanent magnet synchronous motor according to some embodiments.

Figure 3 is a schematic flowchart representation of a method for calibrating a resolver offset associated with an interior permanent magnet synchronous motor, according to some embodiments.

Figure 4 schematically illustrates a resolver offset between a real d axis and an estimated d axis.

Figure 5 illustrates, by way of example, a block diagram of the high frequency injection method for calibrating a resolver offset.

Figure 6 illustrates, by way of example, an estimated d axis current.

Figure 7 illustrates, by way of example, a d axis inductance as a function of d axis current.

DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus or device comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

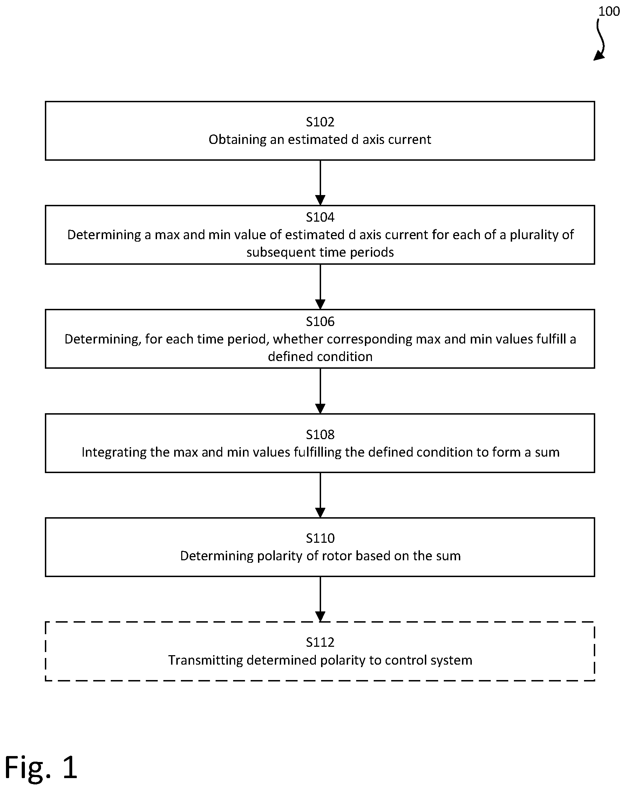

A method for determining polarity of a rotor in an interior permanent magnet synchronous motor for use in a resolver offset calibration operation, a device for performing the method, as well as a method for calibrating a resolver offset associated with an interior permanent magnet synchronous motor will now be described with reference to Fig. 1 to 7. The present inventive concept can be applied to any unit comprising an interior permanent magnet synchronous motor, such as vehicles, or the field of industrial machinery, robotics etc. In the following, the inventive concept will mainly be described in connection with the application in vehicles (such as electric vehicles). However, it is to be appreciated that the present inventive concept is not limited to this field.

By resolver offset calibration operation, it is herein meant a process of calibrating a resolver offset of a resolver connected to the rotor of the motor. The resolver offset calibration can be used for adjusting the resolver signal output to compensate for any mechanical misalignment between the rotor and the resolver (i.e. an angular displacement between an actual rotor position and an estimated rotor position obtained from the demodulated resolver signals). Thus, the resolver offset is calibrated to ensure that the resolver accurately reflects the actual physical position of the rotor of the motor. To define the resolver offset more specifically, the concepts of direct axis (or d axis) and quadrature axis (or q axis) will be used. These concepts are commonly used in motor control techniques, such as field-oriented control (FOC), and are central for understanding the theory of operation for these techniques. In geometric terms, the d axis and q axis can be seen as a two dimensional representation of the flux, current and/or voltage contributed by the three separate sinusoidal phase quantities of a three-phase motor. The d axis is the axis directed in the same direction as a rotor flux. The q axis is perpendicular to the d axis. Thus, the q axis is 90 degrees out of phase with the d axis. In other words, the q axis is offset by 90 degrees anticlockwise from the d axis. In simplistic terms, the d axis is the main flux direction of the rotor, while the q axis is the main torque producing direction. It is to be appreciated that any angle referred to herein may be seen as an electrical angle. In other words, the angle can be expressed in electrical degrees. Thus, "degrees" may be interchanged with "electrical degrees".

By using the d axis and q axis as reference, it becomes possible to describe and control the motor's electrical and magnetic behaviour in a more simplistic way. The current in the motor is typically transformed into the d-q reference frame, where the control algorithms can easily manipulate and control the torque and flux components independently. Moreover, by the transformation into the d-q reference frame, the alternating signals can be represented as direct signals, which simplified analysis and calculations. It further enables precise control of the motor's torque and speed.

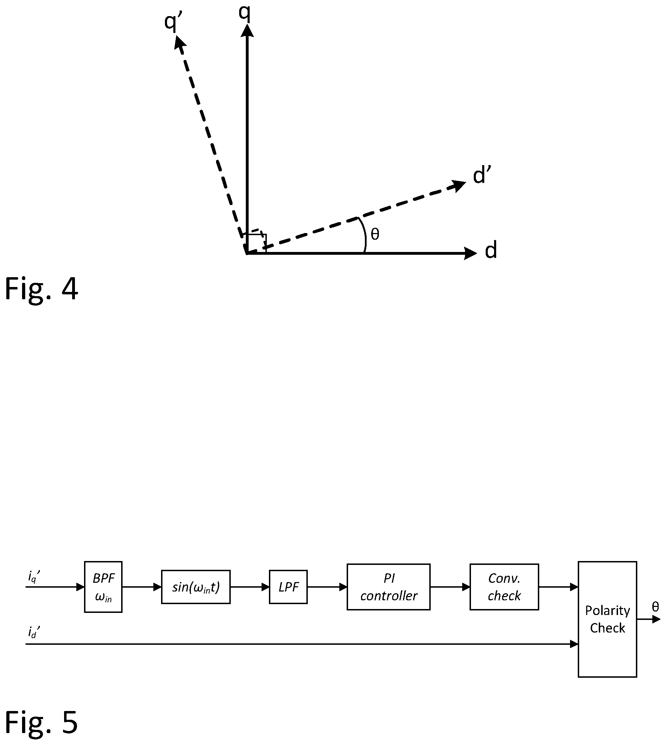

Fig. 4 schematically illustrates the above mentioned concept of the d axis (herein represented by the solid line arrow denoted d) and the q axis (herein represented by the solid line arrow denoted q). The resolver offset (herein denoted by the angle θ) can be defined as the angle between the real (or actual) d axis and an estimated d axis (herein represented by the broken line arrow denoted d'). The estimated d axis should be understood as the d axis as determined from the resolver. In other words, the estimated d axis may be seen as the direction of the flux as seen by the resolver. Consequently, the resolver offset (angle) θ can also be found as the angle between the actual q axis q, and an estimated q axis (herein represented by the broken line arrow denoted q') perpendicular to the estimated d axis d'.

Thus, after having determining the resolver offset angle θ, the control of the motor can be adapted such that the real d axis and the estimated d axis are aligned. However, after having determined the angular displacement between the actual rotor position and the resolver, the polarity of the rotor remains to be determined, i.e. whether the direction of estimated d axis coincides with the direction of the real d axis, in an opposite direction (i.e. offset by 180 degrees). The resolver offset calibration operation may yield a polarity, however it may not be known whether that polarity is the correct polarity or not. The polarity of the resolver offset calibration operation may be opposite from the actual polarity. A method for determining the polarity will be described in the following. By determining the polarity of the rotor, it is herein meant to determine which end of the rotor corresponds to the north pole, and which end corresponds to the south pole. In other words, which direction the magnetic field is oriented. The method may be seen as a method for checking whether a polarity obtained from the resolver offset calibration operation is correct or not.

Figure 1 is a schematic flowchart representation of a method 100 determining polarity of a rotor in an interior permanent magnet synchronous motor for use in a resolver offset calibration operation. Put differently, the method 100 as described in the following may be performed as part of the resolver offset calibration operation, or be suitable for use in the resolved offset calibration operation. More specifically, the method 100 may be performed after having obtained a position of the rotor through the calibration operation. In some embodiments, the resolver offset calibration operation may be based on the so-called high frequency injection (HFI) method (or more specifically sine wave high frequency injection method). Thus, the resolver position may be obtained through the HFI method. It is however to be noted that the method 100 for determining polarity of the rotor may be applicable to other calibration operations as well. For one, it may be applicable with injection methods that are based on other injected alternating signal as well, such as a square wave or a triangle wave. It may further be applicable to calibration operations based on other techniques than injection of signals, where a rotor polarity has to be determined. However, the method 100 builds upon the concept of signal injection, thus making it particularly suitable for use in combination with calibration operations which also employs such concepts due to simplifying implementation. As way of example, the method 100 will in the following mainly be described in connection with the HFI method, although it is not limited to this realization only.

The method 100 may be a computer-implemented method. The method 100 may for instance be performed by a processing system of a unit comprising the motor, such as a vehicle, an industrial machine or robot. Alternatively, the method 100 may be performed by a standalone device. The processing system may for example comprise one or more processors and one or more memories coupled to the one or more processors, wherein the one or more memories store one or more programs that perform the steps, services and functions of the method 100 disclosed herein when executed by the one or more processors.

Below, the different steps of the method 100 are described in more detail. Even though illustrated in a specific order, the steps of the method 100 may be performed in any suitable order as well as multiple times. Thus, although Fig. 1 shows a specific order of method steps, the order of the steps may differ from what is depicted. In addition, two or more steps may be performed concurrently or with partial concurrence. For example, the step denoted S102 may be performed continuously (i.e. the estimated d axis current may be obtained as a continuous signal) and during the same time as one or more of the steps S104 to S110. Such variation will depend on the software and hardware systems chosen and on designer choice. All such variations are within the scope of the invention. Likewise, software implementations could be accomplished with standard programming techniques with rule-based logic and other logic to accomplish the various steps. The above mentioned and described embodiments are only given as examples and should not be limiting to the present invention. Other solutions, uses, objectives, and functions within the scope of the invention as claimed in the below described patent claims should be apparent for the person skilled in the art.

The method 100 comprises obtaining S102 an estimated d axis current based on an alternating voltage signal injected into the motor. The estimated d axis current should be understood as an output from the resolver in response to the injected alternating voltage signal. In other words, the estimated d axis current may be seen as the measured current along the estimated d axis. The wording "estimate" is herein used as a label to refer to something "as seen by" the resolver. Thus, the "estimated d axis" refers to the d axis as observed by the resolver, as opposed to the "actual" d axis which relates to the physical position of the rotor.

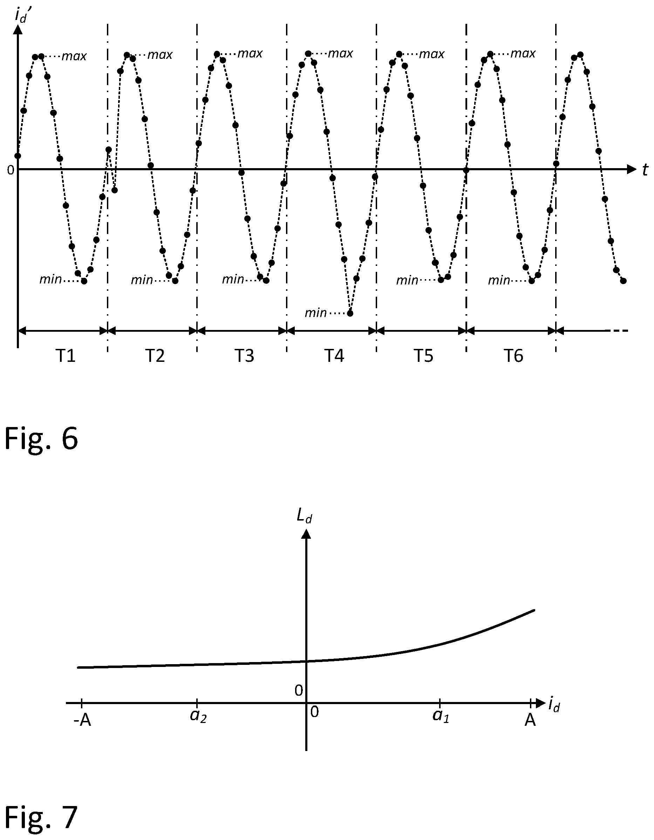

The estimated d axis current may be obtained as a response to the injected signal. The alternating voltage signal may be injected onto an estimated q axis of the resolver. The estimated d axis current may thus be obtained as a signal measurement of the resolver. Fig. 6 (as will be further described below) illustrates, by way of example, an estimated d axis current obtained as a number of discrete current values on the estimated d axis.

The step of obtaining S102 the estimated d axis current may comprise injecting the alternating voltage signal into the motor. The step of obtaining S102 the estimated d axis current may comprise receiving (or measuring) output signals of the resolver.

By the wording alternating, it is herein meant that the signal is periodically changing. In other words, the signal follows a recurring pattern, or a wave form, having a certain frequency. The alternating voltage signal injected into the motor is a sine wave voltage signal. In another example, the alternating voltage signal may be a square wave or a triangle wave. The choice of signal may depend on factors such as the intended purpose, signal processing requirements, or system constraints. Advantageously, the alternating voltage signal injected to determine the polarity may be a same signal as injected during the resolver offset calibration operation. This may provide for a simpler implementation.

Due to the estimated d axis current being a result of the injected alternating signal, it too will be alternating. An illustrative example of the estimated d axis current is shown in Fig. 6, which illustrates the estimated d axis current, $i_d{'}$, over time for a number of discrete sample points. In the illustrated example, the injected signal is a sinusoidal, thus, the estimated d axis current generally also follows a sinusoidal shape as seen by the interpolation line (in broken line) between the sample points.

The method 100 further comprises determining S104, for each of a plurality of subsequent time periods, a maximum (max) and minimum (min) value of the estimated d axis current. Determining S104 the maximum and minimum values may be performed while the estimated d axis current is obtained. In other words, a max and min value may be determined for a new time period for each new period of the alternating voltage signal that is injected.

In the illustrated example of Fig. 6, a first through sixth time period T1-T6 are illustrated. The time periods may be seen as sampling windows of the estimated d axis current. Fig. 6 further illustrates the max and min values for each time period T1 to T6.

The length (i.e. duration) of each time period may be pre-defined. Moreover, the length of each time period of the plurality of time periods may be the same. The length of each time period may for instance corresponds to a period of the estimated d axis current. The period of the estimated d axis current should be the same as a period of the injected signal. Thus, in some embodiments, the length of each time period is set as the period of the injected alternating voltage signal. Put differently, the time period may correspond to the period of the injected signal.

Alternatively, the time periods of the plurality of time periods may be determined dynamically as the estimated d axis current is obtained. In such a case, the duration of the time periods of the plurality of time periods may be different from each other. As an example, the period of the injected alternating voltage signal may be defined as a period between two consecutive zero-crossing rising edges of the estimated d axis current. The zero-crossing rising edge is, as the name suggest, to be understood as a point in which the estimated d axis current goes from being a negative value to a positive value.

In some embodiments, the time period is further defined such that it fulfils a time period condition. In other words, the length of the time period(s) may be set such that it fulfills the time period condition. The time period condition may be that the time period is within a set interval from a period of the injected alternating voltage signal. In other words, the time period should be set so as to not deviate from the period of the injected signal by more than the set interval. The set interval may be at least 75% of the period of the injected alternating voltage signal. Put differently, the time period may be set so as to not deviate from the period of the injected signal by more than 25%. In some embodiments, the set interval may be at least 80% of the period of the injected alternating voltage signal. More specifically, the set interval may be at least 90% of the period of the injected alternating voltage signal. By checking the time period against the time period condition may be advantageous, in particular when the time period is set dynamically (e.g. based on the zero-crossing rising edge), in that the time period can be determined in a more robust way which is less sensitive to spikes or harmonics in the obtained estimated d axis current. This can be illustrated e.g. by the example shown in Fig. 6, where, around the transition between the first time period T1 and the second time period T2, two zero-crossing rising edges occurs due to an erroneous measurement of the estimated d axis current. By requiring that the time period (as in this case is selected between two consecutive zero-crossing rising edges) fulfils the time period condition, an erroneously set time period between these two zero-crossing rising edges can be avoided.

The method 100 further comprises determining S106, for each time period, whether the corresponding maximum and minimum value fulfils a defined condition. Put differently, the max and min values of each time period as determined in the step S104 are checked against the defined condition. The condition on the max and min values may be used to determine whether they are trustable max and min values. In other words, the defined condition may define whether the maximum and minimum values are valid values. By the values being "trustable" or "valid" values, it is herein meant that the values more likely is a correct representation of the estimated d axis current, than being an erroneous measurement, such as a spike or harmonics in the signal. Thus, checking the max and min values against the defined condition may allow erroneous measurements in the estimated d axis current to be distinguished from more accurate measurements. Moreover, a "valid" or "trustable" max (or min) value may thus refer to a max (or min) value that fulfills the defined condition.

In some embodiments, determining S106 whether the maximum and minimum value fulfils the defined condition comprises determining whether the maximum and minimum value does not deviate from each other by more than a threshold value. Put differently, the defined condition may be that the max and min values (of a time period) does not deviate from each other by more than the threshold value. More specifically, the defined condition may be fulfilled if the following expression holds true,

$$k > fac \cdot \left| \left| i'_{dmax} \right| - \left| i'_{dmin} \right| \right|,$$

where $k$ is the threshold value, $i'_{dmax}$ is the max value of the estimated d axis current, $i'_{dmin}$ is the min value of the estimated d axis current, and *fac* is a programmable factor. The programmable factor may be used to scale the difference between the max and min value.

In some embodiments, determining S106 whether the maximum and minimum value fulfils the defined condition comprises comparing the maximum and minimum value to a pre-defined value based on characteristics of the motor. Moreover, the max and min values may be compared to a look-up table of values. The max and min value may be compared individually to a respective pre-defined value. If either the max or min value (or both) of a pair of max and mean values (i.e. of the same time period) does not fulfill the comparison against their respective pre-defined value (e.g. being below or above the pre-defined value), the max and min value as a pair may be determined as not fulfilling the defined condition.

The threshold value (or the pre-defined value) may be programmable values, e.g. based on the specific motor. For instance, the threshold value (or the pre-defined value) as mentioned above, may be based on d axis inductance characteristics of the motor. The d axis inductance characteristics may be estimated e.g. by flux measurement techniques. The d-axis inductance may be seen as the inductance measured when flux passes through magnetic poles of the rotor. The threshold value (or the pre-defined value) may be further based on the injected signal. Thus, the threshold value for instance, may be set based on an expected amplitude of the estimated d axis current. In the illustrated example of Fig. 6, the min value of the fourth time period T4 appears to form a spike or noise in the estimated d axis current (as seen by comparison against the other min values). Thus, the max and min values of the fourth time period T4 can be concluded to deviate from each other by more than the threshold value. Alternatively, the min value of the fourth period T4 may be concluded to exceed the pre-defined value to which it may be compared. Thus, it may be determined that the max and min value pair of the fourth time period T4 does not fulfill the defined condition.

As explained in the foregoing, the max and min values within a time period may be compared to each other, or against a pre-defined value, when determining whether they fulfill the defined condition. However, in some embodiments, the max and/or min values may be compared to respective max and min values of previous time periods. As an example, a max (or min) value of one time period may be compared to one or more max (or min) values of preceding time periods. The max (or min) value may for instance be compared to a moving average of a number of preceding max (or min) values. Thus, a deviation of the max (or min) value from an average max (or min) value may be evaluated as part of the defined condition. It is to be appreciated that other statistical metrics may be used in determining whether the max and min values are "valid" or "trustable" values.

As is readily understood from the present disclosure, the defined condition may be implemented in different ways. The defined condition may further comprise a number of sub-conditions. Such variants all fall within the scope of the presently disclosed technology. Moreover, the defined condition may be selected based on a type of the injected alternating voltage signal. For example, the defined condition may be different in a case when the injected signal is a sine wave signal, compared to a case where the signal is a square wave signal.

The method 100 further comprises integrating S108 the maximum and minimum values of the plurality of time periods that fulfil the defined condition, thereby forming a sum of the maximum and minimum values fulfilling the defined condition. Thus, only those max and min value pairs that fulfill the defined condition are used in the integration to form the sum. For example, in the illustrated example of Fig. 6, the max an min values of the fourth time period T4 is left out (or discarded) from the integration for not fulfilling the defined condition (e.g. because the min value in this case appears to be erroneous). Instead, only the first, second, third, fifth and sixth time periods may be included in the integration. The wording "integrating" may be interchanged with accumulating or summing. For instance, the max and min values may be integrated S108 by being added together into the sum. The sum may thus be understood as an integrated value. In some embodiments, the sum may be formed as a weighted sum.

The method further comprises determining S110 the polarity of the rotor based on the sum. More specifically, the polarity of the rotor may be determined S110 based on the value of the sum, or the sign of the sum (i.e. whether it is positive or negative). Thus, the polarity can be determined by comparing the sum to 0. As stated above, the polarity of the rotor may be determined S110 as either 0 or 180 degrees offset from a rotor position (i.e. angular position) determined by the resolver offset calibration operation. Thus, the polarity may be determined S110 as 0 degrees or 180 degrees offset depending on the value of the sum (or more specifically the sign of the sum), depending on the specific realization and characteristics of the motor. In particular, the polarity of the rotor may be determined further based on d axis inductance characteristics of the motor. The determination of the polarity may be based on the d axis inductance characteristics in the sense that the sum is evaluated by certain criteria based on the d axis inductance characteristics of the motor. For example, the polarity may be determined S110 as 0 degrees offset from the rotor position determined by the resolver offset calibration operation, if the sum is less than 0, and as 180 degrees offset, if the sum is greater than 0.

The method 100 may further comprise transmitting S112 the determined polarity to a control system of the motor. The control system of the motor may then perform the motor control taking into account the determined polarity of the rotor.

The above described method may be performed continuously, as the alternating voltage signal is injected. Thus, for each injected period of the alternating voltage signal, a new maximum and minimum value may be determined for a new time period, and evaluated against the defined condition. The determined sum may then be a rolling sum over a number of most recent time periods, or as an aggregated sum over all time periods during which the alternating voltage signal is injected for the purpose of determining the polarity. Moreover, the method may be performed for a fixed amount of time. In other words, the alternating voltage signal may be injected for a fixed amount of periods, or max and min values may be determined for a fixed amount of time periods. Alternatively, or in combination, the method may be performed until a certain amount of max and min value pairs that fulfills the determined condition has been reached. This may be to ensure that a certain level of confident in the integrated sum can be achieved.

Executable instructions for performing these functions are, optionally, included in a non-transitory computer-readable storage medium or other computer program product configured for execution by one or more processors.

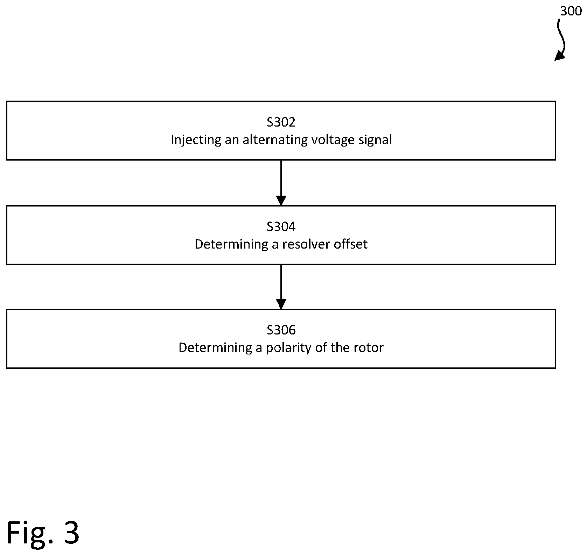

For the sake of improved understanding, a more detailed example of the method 100 for determining the polarity will now be described. In the following example, the injected alternating voltage signal is assumed to be a sine wave voltage signal, and the resolver offset calibration operation is performed using the HFI method, the principle of which is to obtain the correct resolver offset angle θ by applying a high frequency sinusoidal voltage onto the estimated d axis and employing PI controllers to converge the q axis current, and checking the absolute min and max values of the d axis current after the convergence. A block diagram illustrating, by way of example, the different components of a typical HFI implementation is shown in Figure 5. Herein, $\omega_{in}$ is the injected sinusoidal voltage electrical frequency, $i_d'$ is the estimated d axis current, $i_q'$ is the estimated q axis current, *BPF* means band pass filter, *LPF* means low pass filter, and *Conv. check* is a convergence check to determine whether the PI controller output (i.e. resolver offset) has reached a stable value. The output of the convergence check is thus a calibrated resolver offset in terms of angular position, but with the polarity yet to be determined. In other words, the orientation of the rotor may be known, but not which direction (south to north pole) it is arranged. The output of the convergence check can be inputted into a polarity check, together with an estimated d axis current. The polarity check block is then configured to determine the polarity of the rotor. The method 100 for determining the rotor polarity as described above, provides a way of implementing the functions of the polarity check block. The method 300 for calibrating the resolver offset, which will be further explained below in connection with Fig. 3 may correspond to the complete block diagram of Fig. 5.

The polarity can in this case be determined based on the estimated d axis current, $i_d'$. After the injection of the sine wave voltage signal, and transformation into the d-q space, the estimated d axis current can be expressed as

$$i_d' = \frac{u_{in} \sin \omega_{in}t}{\omega_{in}(L^2 - \Delta L^2)}(L + \Delta L \cos 2\theta),$$

where $u_{in}$ is the injected sinusoidal voltage magnitude, $L = (L_d + L_q)/2$, $\Delta L = (L_q - L_d)/2$, where $L_d$ is the d axis inductance of the electric motor, and $L_q$ is the q axis inductance of the electric motor. After the convergence, the resolver offset θ [0,2π) can be 0 or π, of which π will lead to a wrong polarity. Thus, in the case when θ = 0, then the estimated d axis current is the same as the actual d axis current, $i_d' = i_d$. If instead θ = π, then the estimated d axis current is opposite to the actual d axis current, $i_d' = -i_d$.

When θ is either 0 or π, equation (1) becomes

$$i_d' = \frac{u_{in} \sin \omega_{in}t}{\omega_{in}(L^2 - \Delta L^2)}(L + \Delta L) = \frac{u_{in} \sin \omega_{in}t}{\omega_{in}L_d}$$

According to the d axis inductance characteristics of the motor, the d axis inductance is fundamentally positively related to the d axis current. Fig. 7 shows, by way of example, how the d axis inductance $L_d$ can look as a function of the d axis current $i_d$. More specifically, Fig. 7 shows the d axis inductance $L_d$ for an d axis current interval from -A to A. The curve illustrated In Fig. 7 may represent the d axis inductance characteristics of the motor. As can be seen in the graph, the d axis inductance increases as d axis current increases, meaning that $L_d(a_1)$ will be larger than $L_d(a_2)$, for any $a_1 > a_2$. For the max and min values of the d axis current, the following should thus hold, $L_d\left(i_{d\,max}'\right) > L_d\left(i_{d\,min}'\right)$. Therefore, if $\left|i_{d\,max}'\right| < \left|i_{d\,min}'\right|$, then θ = 0, and if $\left|i_{d\,max}'\right| > \left|i_{d\,min}'\right|$, then θ = π.

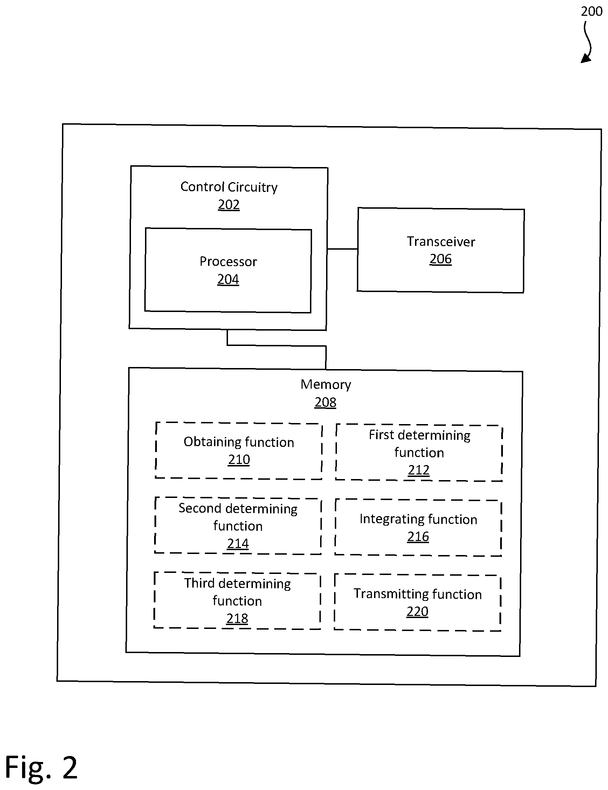

Figure 2 is a schematic illustration of a device 200 for determining polarity of a rotor in an interior permanent magnet synchronous motor for use in a resolver offset calibration operation. In particular, the device 200 is configured to perform the techniques described in the foregoing with reference to Fig. 1. The device 200 may e.g. be provided locally in a vehicle comprising the motor.

However, as can be readily understood, the device 200 may be provided as an external device to the vehicle, such as a remote server or cloud implementation. In such case, the device 200 may be communicatively connected to the vehicle.

The device 200 comprises control circuitry 202. The control circuitry 202 may physically comprise one single circuitry device. Alternatively, the control circuitry 202 may be distributed over several circuitry devices. As an example, the device 200 may share its control circuitry 202 with other parts of the vehicle, such as a control system of the vehicle. In another example, the device 200 may be a motor control system configured to perform the overall control of the motor.

As shown in the example of Fig. 2, the device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the device 200. The control circuitry 202 may include a processor 204, such as a central processing unit (CPU), microcontroller, or microprocessor. The processor 204 may be configured to execute program code stored in the memory 208, in order to carry out functions and operations of the device 200. The control circuitry 202 is configured to perform the steps of the method 100 as described above in connection with Fig. 1. The steps may be implemented in one or more functions stored in the memory 208. The control circuitry 202 may be configured to execute an obtaining function 210, a first determining function 212, a second determining function 214, an integrating function 216 and/or a third determining function 218. The control circuitry 202 may be further configured to execute a transmitting function 220. It should be noted that the various function and operation of the device 200 may be implemented in additional functions than those described herein. In addition, one or more of the above functions may be implemented together in a common function. For example, the first, second and third determining function 212, 214, 218 may be implemented by a common determining function.

The transceiver 206 may be configured to enable the device 200 to communicate with other devices. The transceiver 206 may both transmit data from and receive data to the device 200. For example, the device 200 may collect data from the motor and resolver. Further, the device 200 may transmit data to other units or systems.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long term data storage and a volatile memory that functions as system memory for the device 200. The memory 208 may exchange data with the circuitry 202 over the data bus. Accompanying control lines and an address bus between the memory 208 and the circuitry 202 also may be present.

Functions and operations of the device 200 may be implemented in the form of executable logic routines (e.g., lines of code, software programs, etc.) that are stored on a non-transitory computer readable recording medium (e.g., the memory 208) of the device 200 and are executed by the circuitry 202 (e.g. using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. Also, while the described functions and operations may be implemented in software, such functionality may as well be carried out via dedicated hardware or firmware, or some combination of one or more of hardware, firmware, and software. In the following, the function and operations of the device 200 is described.

The control circuitry 202 is configured to obtain an estimated d axis current based on an alternating voltage signal injected into the motor. This may be performed e.g. by execution of the obtaining function 210.

The control circuitry 202 is further configured to determine, for each of a plurality of subsequent time periods of the injected alternating voltage signal, a maximum and minimum value of the estimated d axis current. This may be performed e.g. by execution of the first determining function 212.

The control circuitry 202 is further configured to determine, for each time period, whether the corresponding maximum and minimum value fulfils a defined condition. This may be performed e.g. by execution of the second determining function 214.

The control circuitry 202 is further configured to integrate the maximum and minimum values of the plurality of time periods that fulfil the defined condition, thereby forming a sum of the maximum and minimum values fulfilling the defined condition. This may be performed e.g. by execution of the integrating function 216.

The control circuitry 202 is further configured to determine the polarity of the rotor based on the sum. This may be performed e.g. by execution of the third determining function 218.

The control circuitry 202 may be further configured to transmit the determined polarity to a control system of the motor. This may be performed e.g. by execution of the transmitting function 220.

It should be noted that principles, features, aspects, and advantages of the method 100 as described above in connection with Fig. 1, are applicable also to the device 200 described herein. In order to avoid undue repetition, reference is made to the above.

Figure 3 is a schematic flowchart representation of a method 300 for calibrating a resolver offset associated with an interior permanent magnet synchronous motor. Put differently, the method 300 corresponds to what above is referred to as a resolver offset calibration operation. More specifically, the method 300 is a signal injection method for offset calibration. Thus it enjoys any advantages of such methods, such as making it possible to perform the resolver offset calibration without the need or rotating the rotor. In some embodiments, the method 300 may be based on the high frequency injection (HFI) method (or more specifically sine wave high frequency injection method), as has been explained in the foregoing. However, the method 300 also encompasses other types of injection methods.

The method 300 may be a computer-implemented method. Any aspects or features relating to the implementation of the method 100 for determining the rotor polarity as explained above in connection with Fig. 1, applies to the method 300 for calibrating the resolver offset. To avoid undue repetition, reference is made to the above. It is further to be noted that the method 300 may be performed by a device in a same way as the device 200 described above. In some embodiments, the method 300 described herein, and the method 100 described in connection with Fig. 1 may be performed by the same device.

Below, the different steps of the method 300 are described in more detail. Even though illustrated in a specific order, the steps of the method 300 may be performed in any suitable order as well as multiple times. Thus, although Fig. 3 shows a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. The above mentioned and described embodiments are only given as examples and should not be limiting to the present invention. Other solutions, uses, objectives, and functions within the scope of the invention as claimed in the below described patent claims should be apparent for the person skilled in the art.

The method 300 comprises injecting S302 an alternating voltage signal into the motor. The alternating voltage signal may e.g. be a sine wave signal voltage signal. The following steps may be performed while the alternating voltage signal is injected.

The method 300 further comprises determining S304 a resolver offset based on a regulator configured to adjust the estimated d axis such that an estimated q axis current is below a set-point value. More specifically, the regulator may adjust the estimated d axis such that the estimated q axis current becomes zero, or converges around zero. In other words, the estimated q axis current may be minimized. The set-point value may thus be a tolerance value around zero. The regulator may thus correspond to the PI regulator as explained in connection with Fig. 5 above. The step S304 of determining the resolver offset may be seen as a step of calibrating the resolver offset.

The resolver offset defines a difference between an actual rotor position and a resolver position. The actual rotor position is thus the physical angular position of the rotor, while the resolver position refers to the position of the rotor as seen by the resolver (i.e. the rotor position in a point of reference of the resolver). Thus, the resolver position may be seen as an estimated rotor position from demodulated resolver signals. For further explanation of the resolver offset, reference is made to above in connection with Fig. 1.

The method 300 further comprises determining S306 a polarity of the rotor by performing the steps of the method 100 as explained above in connection with Fig. 1.

Executable instructions for performing these functions are, optionally, included in a non-transitory computer-readable storage medium or other computer program product configured for execution by one or more processors.

The method 300 further comprises determining S306 a polarity of the rotor by performing the steps of the method 100 as explained above in connection with Fig. 1.

Executable instructions for performing these functions are, optionally, included in a non-transitory computer-readable storage medium or other computer program product configured for execution by one or more processors.

## Claims

1. A method (100) for determining polarity of a rotor in an interior permanent magnet synchronous motor for use in a resolver offset calibration operation, the method (100) comprising:

   obtaining (S102) an estimated d axis current based on an alternating voltage signal injected into the motor;
   determining (S104), for each of a plurality of subsequent time periods, a maximum and minimum value of the estimated d axis current;
   determining (S106), for each time period, whether the corresponding maximum and minimum value fulfils a defined condition, wherein determining (S106) whether the maximum and minimum value fulfils the defined condition comprises: determining whether the maximum and minimum value does not deviate from each other by more than a threshold value or comparing the maximum and minimum value to a pre-defined value based on characteristics of the motor;

integrating (S108) the maximum and minimum values of the plurality of time periods that fulfil the defined condition, thereby forming a sum of the maximum and minimum values fulfilling the defined condition; and

determining (S110) the polarity of the rotor based on the sum;

wherein the method (100) is **characterized in that** the alternating voltage signal injected into the motor is a sine wave voltage signal.

2. The method (100) according to claim 1, wherein the polarity of the rotor is determined further based on d axis inductance characteristics of the motor.

3. The method (100) according to any one of the claims 1 to 2, wherein the polarity is determined (S110) as 0 degrees offset from a rotor position determined by the resolver offset calibration operation, if the sum is less than 0, and as 180 degrees offset, if the sum is greater than 0.

4. The method (100) according to any one of the claims 1 to 3, wherein the defined condition defines whether the maximum and minimum values are valid values.

5. The method (100) according to any one of the claims 1 to 4, wherein the threshold value is based on d axis inductance characteristics of the motor.

6. The method (100) according to any one of the claims 1 to 5, wherein the time period is defined as a period between two consecutive zero-crossing rising edges of the estimated d axis current.

7. The method (100) according to any one of the claims 1 to 6, wherein the time period is further defined such that it fulfils a time period condition, wherein the time period condition is that the time period is within a set interval from a period of the injected alternating voltage signal.

8. The method (100) according to claim 7, wherein the set interval is at least 75% of the period of the injected alternating voltage signal.

9. The method (100) according to any one of the claims 1 to 8, further comprising transmitting (S112) the determined polarity to a control system of the motor.

10. A computer program product comprising instructions which, when the program is executed by a computing device, causes the computing device to carry out the method (100) according to any one of claims 1 to 9.

11. A device (200) for determining polarity of a rotor in an interior permanent magnet synchronous motor for use in a resolver offset calibration operation, the device (200) comprising control circuitry (202) configured to:

obtain an estimated d axis current based on an alternating voltage signal injected into the motor;

determine, for each of a plurality of subsequent time periods of the injected alternating voltage signal, a maximum and minimum value of the estimated d axis current;

determine, for each time period, whether the corresponding maximum and minimum value fulfils a defined condition, wherein determining whether the maximum and minimum value fulfils the defined condition comprises: determining whether the maximum and minimum value does not deviate from each other by more than a threshold value or comparing the maximum and minimum value to a pre-defined value based on characteristics of the motor;

integrate the maximum and minimum values of the plurality of time periods that fulfil the defined condition, thereby forming a sum of the maximum and minimum values fulfilling the defined condition; and

determine the polarity of the rotor based on the sum;

wherein the device (200) is **characterized in that** the alternating voltage signal injected into the motor is a sine wave voltage signal.

12. A method (300) for calibrating a resolver offset associated with an interior permanent magnet synchronous motor, the method (300) comprising:

injecting (S302) an alternating voltage signal into the motor;

determining (S304) a resolver offset based on a regulator configured to adjust the estimated d axis such that an estimated q axis current is below a set-point value, wherein the resolver offset defines a difference between an actual rotor position and a resolver position;

determining (S306) a polarity of the rotor by performing the steps of the method (100) according to any one of the claims 1 to 9.

**Patentansprüche**

1. Verfahren (100) zum Bestimmen einer Polarität eines Rotors in einem inneren Permanentmagnetsynchronmotor zur Verwendung in einem Resolver-Versatzkalibrierungsvorgang, wobei das Verfahren (100) Folgendes umfasst:

Erlangen (S102) eines geschätzten d-Achsenstroms basierend auf einem Wechselspannungssignal, das in den Motor injiziert wird;

Bestimmen (S104), für jede einer Vielzahl aufeinanderfolgender Zeitperioden, eines maximalen und eines minimalen Wertes des geschätzten d-Achsenstroms;

Bestimmen (S106), für jede Zeitperiode, ob der entsprechende maximale und der entsprechende minimale Wert eine definierte Bedingung erfüllen, wobei das Bestimmen (S106), ob der maximale und der minimale Wert die definierte Bedingung erfüllen,

Folgendes umfasst: Bestimmen, ob der maximale und der minimale Wert nicht um mehr als einen Schwellenwert voneinander abweichen, oder Vergleichen des maximalen und des minimalen Wertes mit einem vordefinierten Wert basierend auf Kennzeichen des Motors;

Integrieren (S108) des maximalen und des minimalen Wertes der Vielzahl von Zeitperioden, welche die definierte Bedingung erfüllen, und dadurch Bilden einer Summe des maximalen und des minimalen Wertes, welche die definierte Bedingung erfüllen; und

Bestimmen (S110) der Polarität des Rotors basierend auf der Summe;

wobei das Verfahren (100) **dadurch gekennzeichnet ist, dass** das Wechselspannungssignal, das in den Motor injiziert wird, ein Sinuswellenspannungssignal ist.

2. Verfahren (100) nach Anspruch 1, wobei die Polarität des Rotors ferner basierend auf d-Achseninduktanzkennzeichen des Motors bestimmt wird.

3. Verfahren (100) nach einem der Ansprüche 1 bis 2, wobei die Polarität, falls die Summer kleiner als 0 ist, als ein Versatz von 0 Grad und, falls die Summe größer als 0 ist, als ein Versatz von 180 Grad von einer Rotorposition bestimmt (S110) wird, die durch den Resolver-Versatzkalibrierungsvorgang bestimmt wird.

4. Verfahren (100) nach einem der Ansprüche 1 bis 3, wobei die definierte Bedingung definiert, ob der maximale und der minimale Wert gültige Werte sind.

5. Verfahren (100) nach einem der Ansprüche 1 bis 4, wobei der Schwellenwert auf d-Achseninduktanzkennzeichen des Motors basiert.

6. Verfahren (100) nach einem der Ansprüche 1 bis 5, wobei die Zeitperiode als eine Periode zwischen zwei aufeinanderfolgenden ansteigenden Nulldurchgangsflanken des geschätzten d-Achsenstroms definiert wird.

7. Verfahren (100) nach einem der Ansprüche 1 bis 6, wobei die Zeitperiode ferner derart definiert wird, dass sie eine Zeitperiodenbedingung erfüllt, wobei die Zeitperiodenbedingung darin besteht, dass die Zeitperiode innerhalb eines eingestellten Intervalls von einer Periode des injizierten Wechselspannungssignals liegt.

8. Verfahren (100) nach Anspruch 7, wobei das eingestellte Intervall mindestens 75 % der Periode des injizierten Wechselspannungssignals beträgt.

9. Verfahren (100) nach einem der Ansprüche 1 bis 8, ferner umfassend Übertragen (S112) der bestimmten Polarität an ein Steuerungssystem des Motors.

10. Computerprogrammprodukt, umfassend Anweisungen, die, wenn das Programm durch eine Rechenvorrichtung ausgeführt wird, die Rechenvorrichtung dazu veranlassen, das Verfahren (100) nach einem der Ansprüche 1 bis 9 umzusetzen.

11. Vorrichtung (200) zum Bestimmen einer Polarität eines Rotors in einem inneren Permanentmagnetsynchronmotor zur Verwendung in einem Resolver-Versatzkalibrierungsvorgang, wobei die Vorrichtung (200) eine Steuerungsschaltung (202) umfasst, die zu Folgendem konfiguriert ist:

Erlangen eines geschätzten d-Achsenstroms basierend auf einem Wechselspannungssignal, das in den Motor injiziert wird;

Bestimmen, für jede einer Vielzahl aufeinanderfolgender Zeitperioden des injizierten Wechselspannungssignals, eines maximalen und eines minimalen Wertes des geschätzten d-Achsenstroms;

Bestimmen, für jede Zeitperiode, ob der entsprechende maximale und der entsprechende minimale Wert eine definierte Bedingung erfüllen, wobei das Bestimmen, ob der maximale und der minimale Wert die definierte Bedingung erfüllen, Folgendes umfasst:

Bestimmen, ob der maximale und der minimale Wert nicht um mehr als einen Schwellenwert voneinander abweichen, oder Vergleichen des maximalen und des minimalen Wertes mit einem vordefinierten Wert basierend auf Kennzeichen des Motors;

Integrieren des maximalen und des minimalen Wertes der Vielzahl von Zeitperioden, welche die definierte Bedingung erfüllen, und
dadurch Bilden einer Summe des maximalen und des minimalen Wertes, welche die definierte Bedingung erfüllen; und
Bestimmen der Polarität des Rotors basierend auf der Summe;
wobei die Vorrichtung (200) **dadurch gekennzeichnet ist, dass** das Wechselspannungssignal, das in den Motor injiziert wird, ein Sinuswellenspannungssignal ist.

12. Verfahren (300) zum Kalibrieren eines Resolver-Versatzes, der einem inneren Permanentmagnetsynchronmotor zugeordnet ist, wobei das Verfahren (300) Folgendes umfasst:

Injizieren (S302) eines Wechselspannungssignals in den Motor;
Bestimmen (S304) eines Resolver-Versatzes basierend auf einem Regulator, der dazu konfiguriert ist, die geschätzte d-Achse derart anzupassen, dass ein geschätzter q-Achsenstrom unter einem Sollwert liegt, wobei der Resolver-Versatz eine Differenz zwischen einer tatsächlichen Rotorposition und einer Resolver-Position definiert;
Bestimmen (S306) einer Polarität des Rotors durch Durchführen der Schritte des Verfahrens (100) nach einem der Ansprüche 1 bis 9.

**Revendications**

1. Procédé (100) de détermination de polarité d'un rotor dans un moteur synchrone à aimant permanent intérieur pour une utilisation dans une opération d'étalonnage de décalage de résolveur, le procédé (100) comprenant :

l'obtention (S102) d'un courant d'axe d estimé sur la base d'un signal de tension alternative injecté dans le moteur ;
la détermination (S104), pour chacune d'une pluralité de périodes de temps ultérieures, d'une valeur maximale et minimale du courant d'axe d estimé ;
la détermination (S106), pour chaque période de temps, de si les valeurs maximale et minimale correspondantes remplissent une condition définie, dans lequel la détermination (S106) de si les valeurs maximale et minimale remplissent la condition définie comprend : la détermination de si les valeurs maximale et minimale ne s'écartent pas l'une de l'autre de plus d'une valeur seuil ou la comparaison des valeurs maximale et minimale à une valeur prédéfinie sur la base de caractéristiques du moteur ;
l'intégration (S108) des valeurs maximales et minimales de la pluralité de périodes de temps qui remplissent la condition définie, formant ainsi une somme des valeurs maximales et minimales remplissant la condition définie ; et
la détermination (S110) de la polarité du rotor sur la base de la somme ;
dans lequel le procédé (100) est **caractérisé en ce que** le signal de tension alternative injecté dans le moteur est un signal de tension sinusoïdale.

2. Procédé (100) selon la revendication 1, dans lequel la polarité du rotor est déterminée en outre sur la base de caractéristiques d'inductance d'axe d du moteur.

3. Procédé (100) selon l'une quelconque des revendications 1 à 2, dans lequel la polarité est déterminée (S110) comme un décalage de 0 degré par rapport à une position de rotor déterminée par l'opération d'étalonnage de décalage de résolveur, si la somme est inférieure à 0, et comme un décalage de 180 degrés, si la somme est supérieure à 0.

4. Procédé (100) selon l'une quelconque des revendications 1 à 3, dans lequel la condition définie définit si les valeurs maximales et minimales sont des valeurs valides.

5. Procédé (100) selon l'une quelconque des revendications 1 à 4, dans lequel la valeur seuil est basée sur des caractéristiques d'inductance d'axe d du moteur.

6. Procédé (100) selon l'une quelconque des revendications 1 à 5, dans lequel la période de temps est définie comme une période entre deux fronts montants de passage par zéro consécutifs du courant d'axe d estimé.

7. Procédé (100) selon l'une quelconque des revendications 1 à 6, dans lequel la période de temps est en outre définie de sorte qu'elle remplisse une condition de période de temps, dans lequel la condition de période de temps est que la période de temps se situe dans un intervalle défini sur la base d'une période du signal de tension alternative injecté.

8. Procédé (100) selon la revendication 7, dans lequel l'intervalle défini est d'au moins 75 % de la période du signal de tension alternative injecté.

9. Procédé (100) selon l'une quelconque des revendications 1 à 8, comprenant en outre la transmission (S112) de la polarité déterminée à un système de commande du moteur.

10. Produit de programme informatique comprenant des instructions qui, lorsque le programme est exécuté par un dispositif informatique, amènent le dispositif informatique à réaliser le procédé (100) selon l'une quelconque des revendications 1 à 9.

11. Dispositif (200) de détermination de polarité d'un rotor dans un moteur synchrone à aimant permanent intérieur pour une utilisation dans une opération d'étalonnage de décalage de résolveur, le dispositif (200) comprenant des circuits de commande (202) configurés pour :

obtenir un courant d'axe d estimé sur la base d'un signal de tension alternative injecté dans le moteur ;

déterminer, pour chacune d'une pluralité de périodes de temps ultérieures du signal de tension alternative injecté, une valeur maximale et minimale du courant d'axe d estimé ;

déterminer, pour chaque période de temps, de si les valeurs maximale et minimale correspondantes remplissent une condition définie, dans lequel la détermination de si les valeurs maximale et minimale remplissent la condition définie comprend : la détermination de si les valeurs maximale et minimale ne s'écartent pas l'une de l'autre de plus d'une valeur seuil ou la comparaison des valeurs maximale et minimale à une valeur prédéfinie sur la base de caractéristiques du moteur ;

intégrer les valeurs maximales et minimales de la pluralité de périodes de temps qui remplissent la condition définie, formant ainsi une somme des valeurs maximales et minimales remplissant la condition défini ; et

déterminer la polarité du rotor sur la base de la somme ;

dans lequel le dispositif (200) est **caractérisé en ce que** le signal de tension alternative injecté dans le moteur est un signal de tension sinusoïdale.

12. Procédé (300) d'étalonnage d'un décalage de résolveur associé à un moteur synchrone à aimant permanent intérieur, le procédé (300) comprenant les étapes consistant à :

injecter (S302) un signal de tension alternative dans le moteur ;

déterminer (S304) un décalage de résolveur sur la base d'un régulateur configuré pour ajuster l'axe d estimé de sorte qu'un courant d'axe q estimé soit inférieur à une valeur de consigne, dans lequel le décalage de résolveur définit une différence entre une position réelle de rotor et une position de résolveur ;

déterminer (S306) une polarité du rotor en réalisant les étapes du procédé (100) selon l'une quelconque des revendications 1 à 9.

100

S102
Obtaining an estimated d axis current

S104
Determining a max and min value of estimated d axis current for each of a plurality of
subsequent time periods

S106
Determining, for each time period, whether corresponding max and min values fulfill a
defined condition

S108
Integrating the max and min values fulfilling the defined condition to form a sum

S110
Determining polarity of rotor based on the sum

S112
Transmitting determined polarity to control system

Fig. 1

200

Control Circuitry
202

Processor
204

Transceiver
206

Memory
208

Obtaining function
210

First determining function
212

Second determining function
214

Integrating function
216

Third determining function
218

Transmitting function
220

# Fig. 2

300

| S302 |
| Injecting an alternating voltage signal |

| S304 |
| Determining a resolver offset |

| S306 |
| Determining a polarity of the rotor |

# Fig. 3

Fig. 4

Fig. 5

Fig. 6

Fig. 7

**REFERENCES CITED IN THE DESCRIPTION**

**Patent documents cited in the description**

- US 10784805 B1
- US 2018138841 A1